Europäisches Patentamt

European Patent Office

Office européen des brevets

(11) Publication number: **0 450 473 A2**

# EUROPEAN PATENT APPLICATION

(21) Application number: **91104823.9**

(51) Int. Cl.⁵: **G01N 27/416**

(22) Date of filing: **26.03.91**

(30) Priority: **02.04.90 JP 35546/90 U**

(43) Date of publication of application:
**09.10.91 Bulletin 91/41**

(84) Designated Contracting States:
**DE GB IT**

(71) Applicant: **HORIBA, LTD.**
**2 Miyanohigashi-machi Kissyoin**
**Minami-ku Kyoto(JP)**

(72) Inventor: **Tomita, Katsuhiko**
**Kinugawa 2-chome 8-17**
**Otsu City, Shiga(JP)**

(74) Representative: **TER MEER - MÜLLER -**
**STEINMEISTER & PARTNER**
**Mauerkircherstrasse 45**
**W-8000 München 80(DE)**

(54) **Apparatus for measuring ionic concentrations.**

(57) The apparatus for measuring a plurality of ionic concentrations simultaneously comprises a sheet-type electrode (11) with a plurality of ion selective electrodes (7, 8, 9) and a common reference electrode (10) formed on the same one sheet (11) provided with a respective number of lead portions (12A, 13A, 14A, 15A) providing for the connection of the respective ion selective electrodes (7, 8, 9) and said common reference electrode (10), respectively, to a computerized operational treatment, memorization and a display system. A plurality of ionic concentrations can be measured simultaneously by disposing one drop of a liquid to be tested on the respective electrode portion of the sheet. Calibration on the basis of the measured results is likewise possible within a remarkably short operation time.

Fig.4

EP 0 450 473 A2

The present invention relates to an apparatus for measuring an ionic concentration, in particular to an apparatus provided with a sheet-type electrode for measuring of at least one ionic concentration.

For measuring the ionic concentration in a liquid such as a solution, an apparatus equipped with a so-called sheet-type electrode is known for the measurement of ions with an ion selective electrode and a reference electrode formed on the same one sheet. With such a sheet-type electrode an ionic concentration can be measured by use of remarkably small quantities of a sample liquid in a range of for example 100 $\mu$l to 1 ml only. Accordingly, this kind of measurement of the ionic concentration has been widely used for various kinds of liquids including blood.

However, the conventional sheet-type electrode can measure the ionic concentration of merely a single ion, and thus it has been necessary, if simultaneous measurement of a plurality of kinds of ions is desired that a plurality of sheet-type electrodes are prepared each one provided for an individual measurement. Accordingly, problems have been left in that for example a liquid to be tested has to be prepared for every object to be measured and it is necessary to repeat the measuring operation for every sheet-type electrode and thus the measurement takes time.

It is an object of the present invention to provide an apparatus for the simultaneous measuring of concentrations of a plurality of kinds of ions.

In order to achieve the above described object, an apparatus for measuring an ionic concentration according to the present invention comprising a sheet-type electrode with a reference electrode and an ion selective electrode formed on the same sheet is characterized in that a reference electrode and a plurality of kinds of ion selective electrodes associated to said reference electrode in common are formed on the same one sheet.

A pH-measuring electrode may be used as one of said plurality of kinds of ion selective electrodes.

With an apparatus for measuring an ionic concentration having the above mentioned characteristic construction, said concentrations of a plurality of ions can be measured for example by merely disposing a drop of liquid to be tested on a surface of the sheet and thus said measuring operation and the quantity required of the liquid to be tested can be remarkably reduced.

In the case where said pH-measuring electrode is used as one of a plurality of kinds of ion selective electrodes, also the calibration of the ionic concentrations measured at the same time on the basis of the measured results can be achieved.

Further objects, advantages and details of the invention are described in the following with reference to the accompanying drawings.

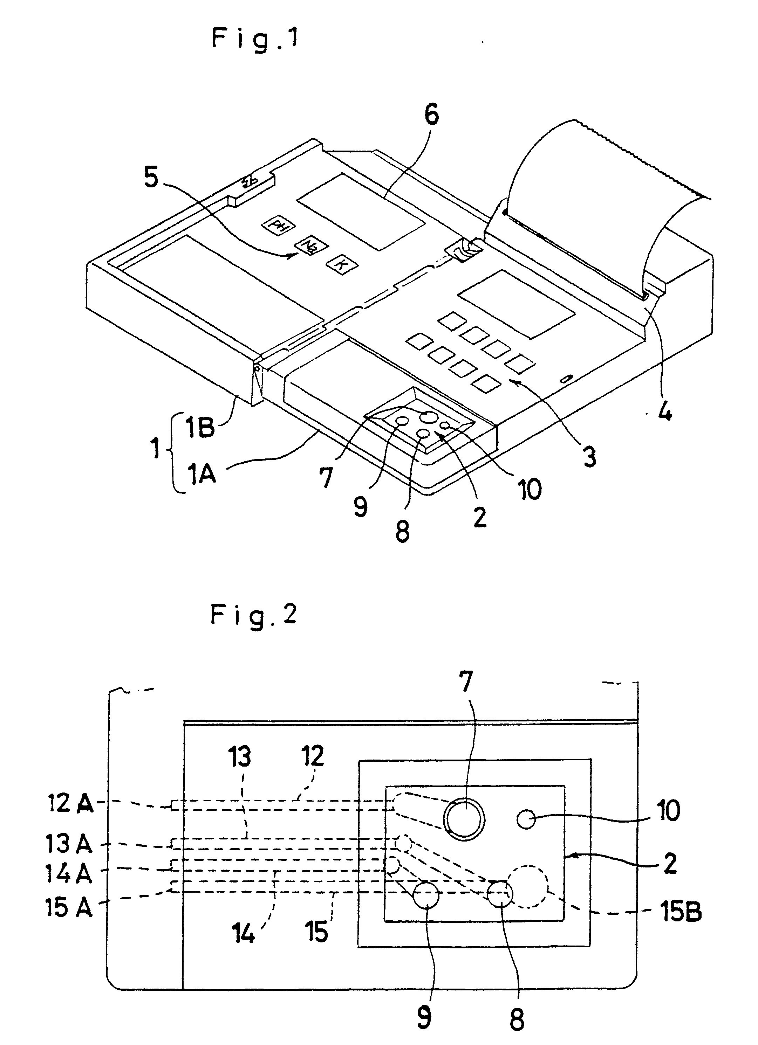

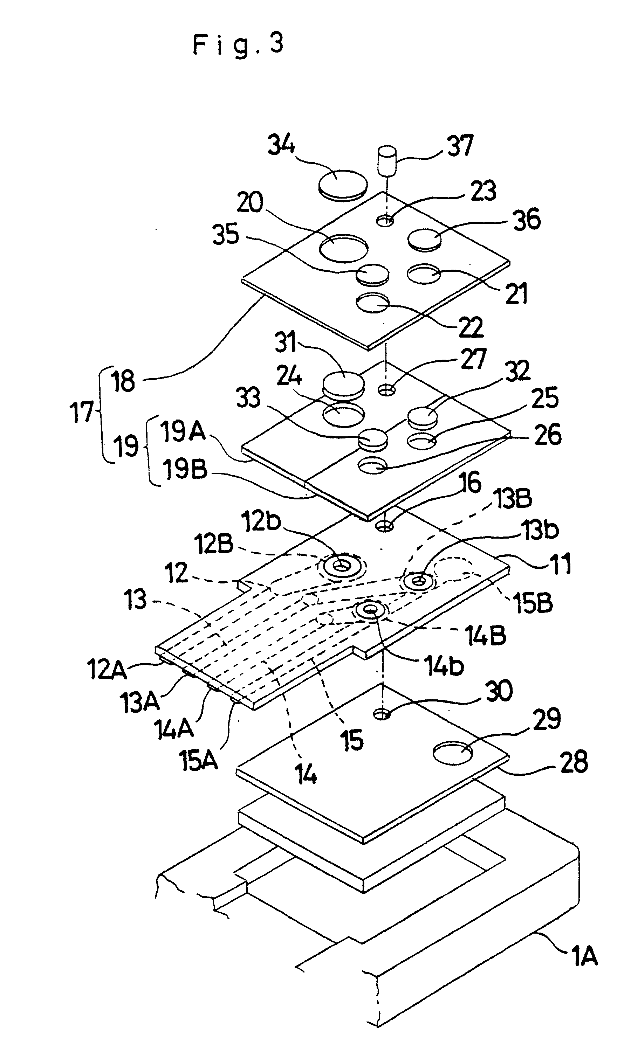

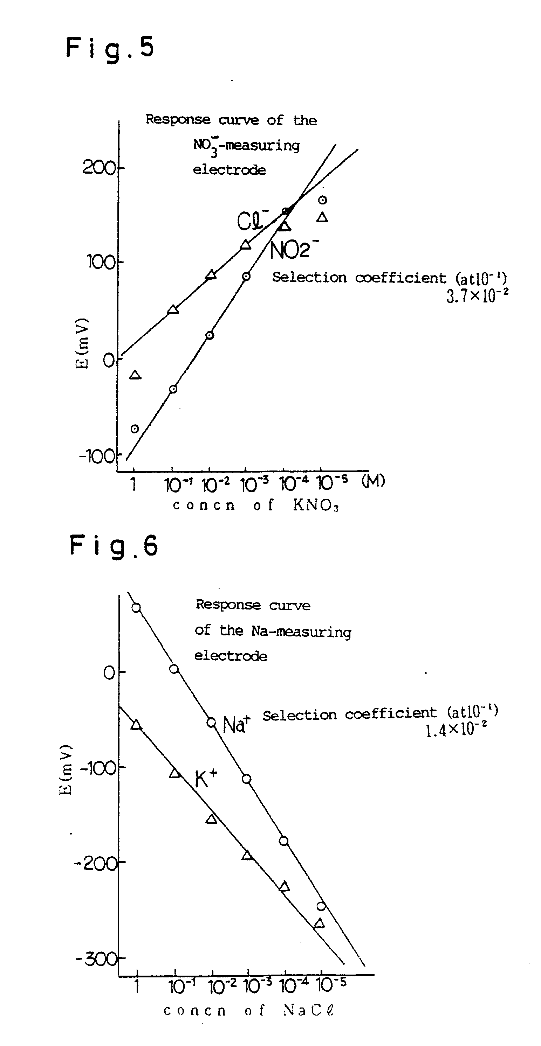

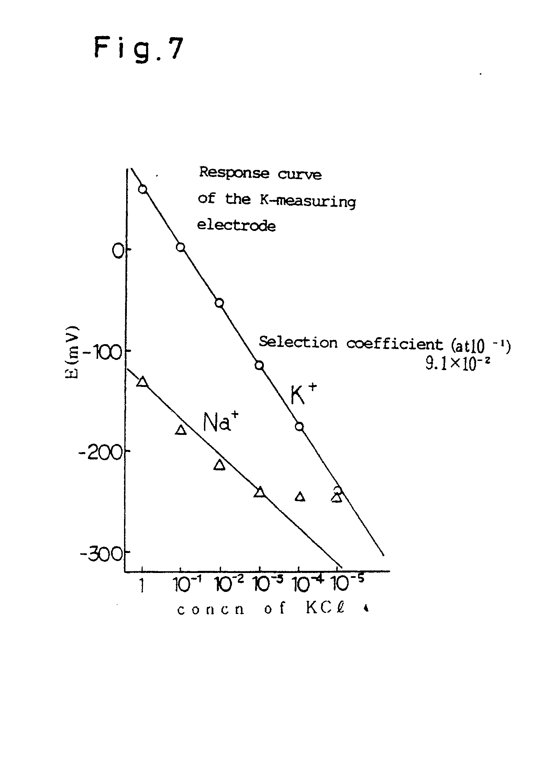

One preferred embodiment of the present invention is shown in Figs. 1 to 4, of which
Fig. 1
is a perspective view of an apparatus according to the present invention for measuring an ionic concentration;
Fig. 2
is an enlarged plan view showing main parts of said apparatus shown in Fig. 1;
Fig. 3
is a disintegrated perspective view showing main parts of a measuring portion of the apparatus of Fig. 1; and
Fig. 4
is a partially sectional view showing said main parts of said measuring portion shown in Fig. 3.
Further, Figs. 5 to 7
are diagrams of response curves of a measuring electrode; and
Fig. 8
is a graph showing the influence of the pH when measuring the concentration of $Ca^{++}$.

The preferred embodiments of the present invention will be described below with reference to Figs. 1 to 4 of the drawings, of which Fig. 1 shows a card pocket calculator-type apparatus for measuring an ionic concentration. Reference numeral 1 designates a flat body case comprising one first case 1A provided with a measuring portion 2, an operational key portion 3, a printer 4 and the like, and a second other case 1B provided with a display-selecting key 5, a display 6 and the like. The measuring portion 2 is provided with a pH-measuring electrode 7, a $Na^+$-measuring electrode 8, a $K^+$-measuring electrode 9 and a reference electrode (liquid junction) 10 being used for said respective measuring electrodes 7, 8, 9 in common on the same one sheet, as shown also in Fig. 2 in further details. In addition, said case 1 also includes a micro computer for carrying out an operational treatment, a memorization of measuring values and other data and the like.

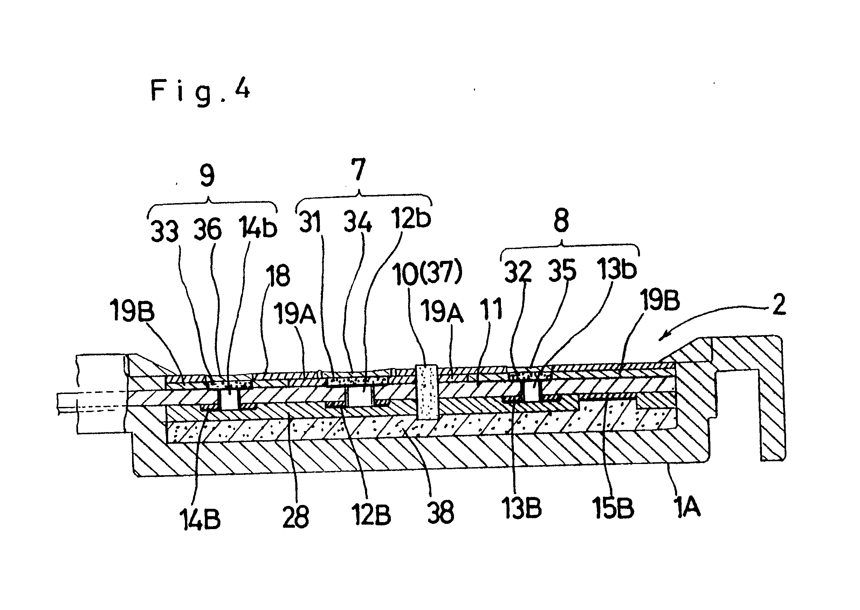

The construction of the main parts of the measuring portion 2 are described with reference to Figs. 3 and 4. Reference numeral 11 designates an insulating substrate made of a material having a sufficiently high insulation even though it is immersed in a solution containing an electrolyte, such as polyethylene terephthalate (hereinafter referred to as PET). Said insulating substrate 11 is provided with four electrodes 12, 13, 14, 15 formed on the lower surface thereof by a grafting treatment and an anchoring treatment with a silane coupling agent and the like followed by silk-screening of an Ag paste.

Portions extended in the direction of one end of the insulating substrate 11 of said electrodes 12, 13, 14, 15 are used as lead portions 12A, 13A, 14A, 15A as they are, while portions positioned in the center of the insulating substrate 11 are formed for example with a circular shape, and such circular portions forming internal electrode portions 12B, 13B, 14B, 15B are coated with an electrode material, such as AgCl. Said internal electrode portions 12B, 13B, 14B with the exception of said internal electrode portion 15B are provided each with a through hole 12a, 13a, 14a, having an electrically conductive portion almost at the center thereof. The internal electrode portion 15B is associated with a through hole 16 in the vicinity thereof. As will become clear from the further description, the internal electrode portion 12B, 13B, 14B correspond to a $Na^+$-measuring electrode 7, a $NO_3^-$-measuring electrode 8 and a pH-measuring electrode 9, respectively. Said through hole 16 serves as said liquid junction 10 of said reference electrode for the respective measuring electrodes 7, 8, 9 in common. The internal electrode portion 15B is connected via the liquid junction portion 37 to a gelatinized internal liquid layer 38.

Reference numeral 17 designates a double-structured insulating support layer provided on the upper surface side of the insulating substrate 11. Said double-structured insulating support layer 17 comprises for example an upper sheet material 18 made of PET and a lower sheet material 19 made of PET 19A and PVC 19B, so that it provides for a sufficiently high insulation even though it is immersed in a solution containing an electrolyte in the same manner as the insulating substrate 11. In other words, said lower sheet material 19 comprises two kinds of sheets 19A, 19B arranged in parallel having the same size (equal in surface area and thickness). Said PET sheet 19A is positioned so as to face to the side where the internal electrode portion 12B and the through hole 16 are provided, and said PVC sheet 19B faces the side where the internal electrode portions 13B, 14B are provided. The insulating support layer 17 is further formed for example by subjecting the splicing surface sides of both sheet materials 18, 19 to a surface treatment by printing with an ultraviolett setting ink and semidrying followed by pressing both sheet materials 18, 19 to each other.

The upper sheet material 18 is provided with for example circular through holes 20, 21, 22 of a defined size and at positions corresponding to the internal electrode portions 12B, 13B, 14B. A through hole 23 having the same diameter as that of the through hole 16 is formed at a position corresponding to the through hole 16. The PET sheet 19A of the lower sheet material 19 is provided with a circular through hole 24 slightly smaller than through hole 20 and at a position corresponding to the through hole 20, and a through hole 27 having the same diameter as that of said through hole 23 is formed at a position corresponding to the through hole 23. In addition, the PVC sheet 19B is provided with through holes 25, 26 slightly smaller than said through holes 21, 22, respectively, and at positions corresponding to the through holes 21, 22, respectively.

Also the upper surface side of the upper sheet material 18 is subjected to said grafting process and said anchoring treatment by the use of a silane coupling agent and the like.

Reference numeral 28 designates a lower support layer provided on the lower surface side of the insulating substrate 11. Said lower support layer 28 is made of for example PET so as to provide for a sufficiently high insulation even though it is immersed in a solution containing an electrolyte in the same manner as the insulating substrate 11 and the insulating support layer 17. The lower support layer 28 is further provided with a through hole 29 and a through hole 30 formed at positions corresponding to the internal electrode portion 15B and the through hole 16 formed in the insulating substrate 11, respectively. In addition, through hole 30 has the same diameter as that of the through hole 16.

Reference numeral 31, 32, 33 designate a gelatinized internal liquid made of for example $(0.03M\text{-}KNO_3\text{-}0.1M\text{-}KCl)$-glycerine-agar-agar, formed in disk-like shape and filled in said through holes 24, 25, 26 in the lower sheet material 19. Said gelatinized internal liquid portions 31, 32, 33 are turned into a paste by heating; they are not only filled in the respective through holes 24, 25, 26 by screen printing under the condition that their upper surfaces are slightly below the upper surface of the upper sheet material 18 under free condition but are also connected with the internal electrode portions 12B, 13B, 14B through said electrically conductive portions within said through holes 12b, 13b, 14b formed in the insulating substrate 11.

Reference numeral 34 designates a pH glass responsive membrane responsive merely to $H^+$ and thus forming a glass electrode, i.e. the pH-measuring electrode 7 on the upper surface of the gelatinized internal liquid 31.

Reference numerals 35, 36 designate a PVC liquid membrane-type ion responsive membrane provided on the upper surfaces of the gelatinized internal liquid portions 32, 33, respectively. In the present preferred embodiment, membrane 35 is selectively responsive to $Na^+$ and membrane 36 is selectively responsive to $K^+$. An ion responsive substance containing a responsive membrane paste is sequentially dropped from above in the gelatinized internal liquid portions 32, 33, respectively, to form the $Na^+$-measuring electrode 8 and the $K^+$-measuring electrode 9.

For example, in order to prepare the responsive membrane 35 of the $Na^+$-measuring electrode 8, Bis-12-Crown-4 as said responsive substance to $Na^+$, PVC powders and di-n-octyl phthalate (n-DOP) as a plasticizer are dissolved in tetrahydrofuran as a solvent in an appointed quantity, respectively, to obtain said responsive membrane paste. The thus obtained responsive membrane paste is sequentially dropped from above into the gelatinized internal liquid portion 33 by means of for example a syringe. In addition, in order to prepare the responsive membrane 36 of the $K^+$-measuring electrode 9, barinomycin as said substance responsive to $K^+$ and di-n-octyl phthalate (n-DOP) as a plasticizer are dissolved in tetrahydrofuran as a solvent in an appointed quantity, respectively, to obtain the responsive membrane paste. The thus obtained responsive membrane paste is dropped from above by means of a syringe into the gelatinized internal liquid portion 32.

Reference numeral 37 designates a gel-impregnated hydrophilic high molecular porous member as a liquid junction of the reference electrode 10 provided to be inserted through the through holes 33, 27, 16, 30 formed at corresponding positions of the upper sheet material 18, the lower sheet material 19A, the substrate 11 and the lower support layer 28. Said gel-impregnated hydrophilic high molecular porous member 37 is made of a sintered molded body of olefin family high polymer powders [for example Sun Fine AQ (trade name) made by Asahi Kasei KK] having a mechanical strength nearly the same as that of polyolefines. The hydrophilicity is achieved by denaturing treatment, i.e. by impregnating said porous member 37 with a so-called undrying out gel composite, which deposits no KCl and does not lose its surface wetness of the porous member after leaving in air, for example a water-containing jelly mainly comprising a Na salt of an acrylic polymer [for example U jelly (trade name) made by Showa Denko KK]. Such impregnation is provided so as to slightly project over the surface of the support layer 10.

Reference numeral 38 designates a gelatinized internal liquid mainly comprising $Na_4Cl$ and adapted not only to be brought into contact with the internal electrode portion 15B formed in the insulating substrate 11 through said through hole 29 formed in the lower support layer 16, but also to contact with the gel-impregnated hydrophilic high molecular porous member 37.

With an apparatus for measuring an ionic concentration having the above described construction, the concentrations of $Na^+$ and $K^+$ and the pH in the liquid to be tested can be simultaneously measured by merely disposing only one drop of the liquid to be tested on the measuring portion 2, and an appointed ionic concentration is displayed on said display 6 by suitably selecting and pushing a key in said display-selecting key 5.

As understood from the above described preferred embodiment, the insulating substrate 11 is provided with the double-structured insulating support layer 17 formed on the upper surface side thereof, the upper sheet material 18 being made of PET, the lower sheet material 19 being made of PET 19A and PVC 19B. The PET sheet 19A is provided with the glass electrode responsive membrane (the $H^+$ glass responsive membrane 34 in the above described preferred embodiment), and the PVC sheet 19B is provided with a PVC liquid membrane-type ion responsive membrane (the $Na^+$ ion responsive membrane 35 and the $K^+$ responsive membrane 36 in the above described preferred embodiment).

The glass responsive membrane is preferably used as the ion responsive membrane 34 provided on the PET sheet 19A, and the PVC liquid membrane-type ion responsive membrane is preferably used as the ion responsive membranes 35, 36, respectively, provided on the PVC sheet 19B. Accordingly, also a $Na^+$ glass responsive membrane and a single crystalline $F^-$ responsive membrane may be used in addition to the above described $H^+$ glass responsive membrane.

The measuring electrodes may be optionally combined. Although not shown, the PET sheet 19A may be provided with the $Na^+$-measuring electrode and the PVC sheet 19B may be provided with the pH-measuring electrode and the $NO_3^-$-measuring electrode so that the concentrations of $Na^+$ and $NO_3^-$ and the pH can be simultaneously measured. In this case, as for the $H^+$ responsive membrane, trioctylphosphine oxide as the responsive substance, PVC powders and o-nitro-phenyloctyl ether as the plasticizer are dissolved in tetrahydrofuran as the solvent in the appointed quantity to obtain the responsive paste, and the obtained responsive paste is disposed drop by drop in the same manner as described above. In addition, as for the $NO_3^-$ responsive membrane, tetraoctylammonium nitrate, which is a nitrate-type quarternary ammonium salt ($RNNO_3$, R: $C_8$ to $C_{17}$), as the $NO_3^-$ responsive substance, tetraoctylammonium nitrate PVC powders and di-n-octyl phthalate as the plasticizer are dissolved in tetrahydrofuran as the solvent in the appointed quantity to obtain the responsive paste, and the obtained responsive paste is disposed drop by drop in the same manner as described above. In this case, it is sufficient that the gelatinized internal liquid 38 on the side of the reference electrode 10 is mainly made of lithium acetate.

Furthermore, the pH and $Ca^{++}$ may be simultaneously measured.

Figs. 5 to 7 show response curves of the $Na^+$-measuring electrode, the $K^+$-measuring electrode and the $NO_3^-$-measuring electrode, respectively.

For example, in the case of simultaneously measuring the ionic concentrations of $Na^+$ and $K^+$ and the pH, provided that the selection coefficients on the basis of mutual interferential characteristics of $Na^+$ and $K^+$ are $K_{Na}$ and $K_K$, the indicated values of the $Na^+$-measuring electrode and the $K^+$-measuring electrode are $S_{Na}$ and $S_K$, and the true concentration values of $Na^+$ and $K^+$ being $[X_{Na}]$ and $[Y_K]$, the following simultaneous equations are valid:

$$S_{Na} = [X_{Na}] + K_{Na}[Y_K]$$
$$S_K = [Y_K] + K_K[X_{Na}]$$

Said true values $X_{Na}$, $Y_K$ can be calibrated in the range of low concentrations of $10^{-4}$ to $10^{-7}$ M and thus a highly accurate measurement can be achieved by operating those values by means of the micro computer included in the apparatus.

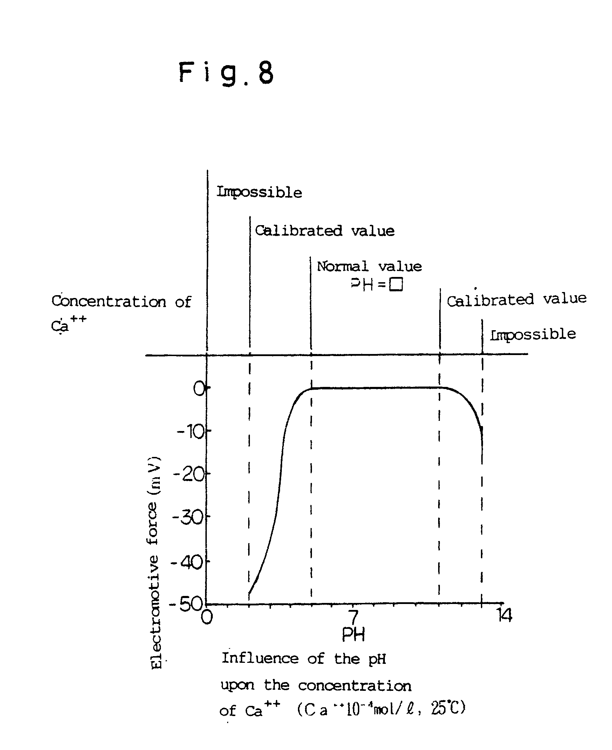

Fig. 8 depicts a graph showing an influence of the pH upon the measurement of concentration of $Ca^{++}$. As visualized by Fig. 8, on the basis of the indicated value of pH, the measuring condition of the $Ca^{++}$-measuring electrode can be indicated as a normal range, a calibrated calculation range and an impossible calculation range.

As described above, according to the present invention a plurality of ionic concentrations can be measured by merely disposing one drop of a liquid to be tested on the sheet and thus the measuring operation and the amount of liquid to be tested can be remarkably reduced. In the case where the pH-measuring electrode is used as one of a plurality of kinds of ion selective electrodes, the ionic concentration, which is measured at the same time, can be also calibrated on the basis of the measurement results. Accordingly, a plurality of kinds of ionic concentrations can be measured simultaneously with high accuracy.

## Claims

1. An apparatus for measuring an ionic concentration, comprising a sheet-type electrode with a reference electrode (10) and an ion selective electrode formed on the same sheet (11), **characterized in that** said reference electrode (10) and a plurality of kinds of ion selective electrodes (7, 8, 9) associated to said one reference electrode (10) in common are formed on said same one sheet (11).

2. The apparatus as set forth in claim 1, wherein one of said plurality of kinds of ion selective electrodes is a pH-measuring electrode (9).

3. The apparatus as set forth in claim 1, wherein in addition to said common reference electrode (10) three ion selective electrodes (7, 8, 9) are provided of which a first one is a $Na^+$-measuring electrode (7), a second one is a $NO_3^-$-measuring electrode (8) and the third one is a pH-measuring electrode (9).

## Fig.1

## Fig.2

Fig.3

Fig. 4

# Fig.5

Response curve of the
$NO_3^-$-measuring
electrode

$Cl^-$

$NO2^-$

Selection coefficient (at$10^{-1}$)
$3.7 \times 10^{-2}$

E(mV)

concn of $KNO_3$

# Fig.6

Response curve
of the Na-measuring
electrode

$Na^+$ Selection coefficient (at$10^{-1}$)
$1.4 \times 10^{-2}$

$K^+$

E(mV)

concn of NaCℓ

# Fig.7

Response curve
of the K-measuring
electrode

Selection coefficient (at $10^{-1}$)
$9.1 \times 10^{-2}$

$K^+$

$Na^+$

E(mV)

$-100$

$-200$

$-300$

0

$1 \quad 10^{-1} \quad 10^{-2} \quad 10^{-3} \quad 10^{-4} \quad 10^{-5}$

concn of KCℓ

# Fig.8

Impossible

Calibrated value

Normal value
pH = □

Calibrated value

Impossible

Concentration of
Ca$^{++}$

Electromotive force (mV)

0

−10

−20

−30

−40

−50

0

7
PH

14

Influence of the pH
upon the concentration
of Ca$^{++}$ (Ca$^{++}$10$^{-4}$mol/ℓ, 25℃)